# EUROPEAN PATENT SPECIFICATION

(11) **EP 1 524 915 B1**
(45) Date of publication and mention of the grant of the patent: **21.03.2007**
(21) Application number: 03771502.6
(22) Date of filing: 31.07.2003
(51) Int. Cl.: A23L 1/164, A23P 1/08, A21D 13/08, A23L 1/36, A23L 1/00

(54) **COATED FOOD PRODUCT**
ÜBERZOGENES NAHRUNGSMITTEL
PRODUIT ALIMENTAIRE ENROBE

(30) Priority: 31.07.2002 EP 02078141; 01.08.2002 US 399700 P
(43) Date of publication of application: 27.04.2005
(73) Proprietor: QUEST INTERNATIONAL B.V., 1411 GP Naarden (NL)
(72) Inventor: ENGELS, Aaldrik, NL-1431 HX Aalsmeer (NL); DOORN, Aloysius, Lambertus, NL-3893 CB Zeewolde (NL)
(74) Representative: van Westenbrugge, Andries
(86) International application number: PCT/NL2003/000552
(87) International publication number: WO 2004/010793

(56) References cited:
- WO-A-98/25477
- GB-A- 1 257 720
- US-A- 4 645 674
- US-A- 4 738 865
- US-A- 4 765 996
- US-A- 4 910 031
- US-A- 5 132 125
- US-A- 5 798 132

## Description

### DESCRIPTION OF THE INVENTION

The present invention relates to a coated food product, in particular a coated food product having at least two layers, wherein the coated food product is selected from the group consisting of oven baked food products, deep fried crisps, extruded products, dry roasted nuts and general dry food products having a water content of less than 5 percent by weight, calculated on the total weight of said general dry food product, said general dry food product being made of materials selected from the group consisting of cereals, preferably wheat and corn, potato and rice. The present invention in particular relates to coated pretzels which are coated with at least two layers.

### BACKGROUND OF THE INVENTION

As is well known in the art, seasoning or flavoring of food products is hampered by several serious drawbacks.

A first disadvantage is that the addition of seasonings or flavors to a food product in a food manufacturing process leads to the formation of dust of the seasonings or flavors which is a healthy risk factor for the employees. Additionally, the formation of dust can lead to cross contamination with other food products made in the same factory.

Another major disadvantage is that added seasonings or flavors do poorly adhere to the food product with the result that the seasonings or flavors fall of the food during transport, packaging, storage and consumption of the food product. This leads to poorly flavored products at the time of consumption and to undesired loss of flavor ingredients. This problem becomes even more acute when attempts are made with large and/or heavy pieces of seasonings. By "large", it is meant that the pieces of seasonings have an average size ranging of at least 0.5 mm, in particular between 1 and 2 mm.

The problems described above occur in particular in the production of flavored pretzels. Pretzels contain about one percent by weight of moisture and are immersed in caustic soda (sodium hydroxyde) prior to the baking process to provide the desired color. However, this immersion step also provides a smooth surface to the pretzel with the result that flavors do not or hardly adhere to said surface. Although it has been attempted to produce flavored pretzels by introducing the flavors into the dough, due to the baking process, the flavors decompose which renders an unacceptable and undesirable taste to the pretzel. Alternatively, after the baking process a slurry of fat and flavors can be applied to cooled pretzels. However, this has disadvantages as well since the consumer will end up with greasy hands and fingers while eating the pretzels. Moreover, in the common production process pretzels are baked in an oven at a temperature of about 90°C and any oil or fat when applied to hot pretzels is adsorbed by the pretzels in about thirty seconds with the result that the flavors do no longer adhere to the surface of the pretzel. Hence, the application of slurries of oil or fat and flavors to either hot or cooled pretzels does also not produce acceptable flavored pretzels.

Several solutions are provided in the art for the technical problems described above. For example, US 4.161.545 discloses a process for a honey coated roasted nut wherein raw nuts are first coated with a mixture comprising about 50 to 80 percent by weight of honey and about 20 to 50 percent by weight of water, said mixture preferably containing about 40 to 70 percent by weight of soluble solids. Subsequently, the honey coated nuts are coated with a dry mixture containing about 84 to 92 percent by weight of sugar and about 8 to 16 percent by weight of starch and finally the nuts are roasted. If the solids content of the honey containing mixture is on the low side of the 40 to 70 percent by weight range of soluble solids, the honey containing mixture preferably also contains a binder such as maltodextrins, dextrins, natural or derived edible polymers, arabic gum, guar gum and cellulose derivatives. Consequently, according to the method disclosed in US 4.161.454 the first layer is applied as a liquid composition and the second layer as a dry composition.

US 4.769.248 discloses a process for the preparation of dry roasted nuts comprising applying a first (dry) layer of starch to raw nuts followed by the application of a gelatin solution. Subsequently, a dry coating of seasonings is applied and finally the nuts are roasted. Consequently, according to the method disclosed in US 4.769.248 the first layer is applied as a dry composition and the second layer as a liquid composition.

US 5.571.546 discloses a multiple coated food product wherein the first coating layer comprises two layers comprising amylose, amylopectin and a minor quantity of disaccharide in different ratios and a second coating layer comprising amylose and amylopectin in a ratio of not less than 1:0.8. Alternatively, the first coating layer may comprise non-pregelatinised waxy starch and optionally non-waxy starch and the second layer may comprise non-waxy starch. The coating layers are preferably applied as dry mixtures or aqueous solutions or suspensions of the layer components.

US 5.599.569 discloses a method for adhering a seasoning to a food product, said method comprising the steps of: coating the food product with a solution containing an amylase treated starch, adhering thereon at least one seasoning, flavorant, or colorant, and drying the resultant food product.

US 5.798.132 discloses a method for preparing a coated food product, wherein a coating composition comprising an oil-in-water emulsion, ungelatinised starch, and a seasoning is applied to the food product, where after the food product is subjected to a two stage drying process. The food product disclosed in US 5.798.132 has only one layer.

US 6.294.208 discloses a method for the production of highly seasoned chips, wherein a base chip is coated with an oleaginous composition comprising a seasoning followed by adhering a dry seasoning material. The oleaginous composition comprises an oil from an animal source, an oil from a vegetable source or a non-nutritive oil. Consequently, according to the method disclosed in US 6.294.208 the first layer is applied as a liquid composition and the second layer as a dry composition.

EP A 841.012 discloses a method for the preparation of a snack product, in particular a coated nut, wherein the nut is first coated with a paste layer of flour. This first layer may be applied by bringing the nuts in a rotating drum and by adding flour in powder form and simultaneously spraying water. The second layer is an adhesive layer and is applied by battering or gumming a mixture of water and adhesive. Subsequently, a layer of bread crumbs is applied and finally the nut is fried. Flavors, aromas and seasonings may be added during the application of the adherent layer or the bread crumb layer. Consequently, the flavors, aromas and seasonings are not present in the first layer.

WO 01/05256 discloses a method for coating a food product by dipping in, tumbling or spraying the food product with a coating composition comprising a suspension of particles in a carrier oil, wherein said particles have a particular particle size and a particular particle size distribution. The particles comprise essentially flavoring or seasoning components and optionally carriers or diluents. Hence, the food product according to WO 01/05256 has only one layer. US 4,910,031 describes savoury snack food topped with substances by means of a non sweet sugars based binder. In particular example II describes the coating with a binder comprising 65 wt.% sucrose of dried corn collets previously sprayed with oil, cheddar cheese and salt

GB 1,257,720 describes animal foods comprising porous expanded chunks covered with a coating of fat and flavours; the fat coated chunks having a further coating comprising dextrin and optionally a flavouring additive such as sucrose. Exemplified are dextrin coating compositions made of 23 parts dextrin and 2 parts sucrose.

US 5,132,125 describes corn kernels coated with an edible oleaginous substance or edible wax optionally comprising flavourings, and thereafter covered with an outer shell comprising an edible polymeric material and an anti-fragility and palatability enhancer such as sugar, whereby the corn kernels treated therewith exhibit complete popping and are less prone to drying. In particular example I discloses an outer shell composition made of a liquid mixture of 1.5 wt% aqueous algin and 0.15 wt.% glycerine.

The methods according to the prior art are still insufficient with respect to seasoning or flavor adherence. In particular, it is an object of the invention to provide a method with good adherence of the seasoning and/or flavour and/or decorations so-called hereinafter "toppings", especially when large and/or heavy pieces of such toppings are considered. Of course, by "topping" is also encompassed that more than one topping is included.

### SUMMARY OF THE INVENTION

The present invention therefore relates to a method for preparing a coated food product comprising:
(a) coating the food product in a first step with a layer of a first liquid mixture comprising a topping with a size greater than 0,5 mm and an oil or fat;
(b) coating the coated food product obtained in step (a) in a second step with a layer of a second liquid mixture comprising from:
   i) 5 to 40 wt.% of a binder selected from selected from the group consisting of maltodextrins having a dextrin equivalent in the range of 0.1 to 10, dextrin, edible polymers, arabic gum, guar gum and cellulose derivatives;
   ii) 5 to 40 wt.% of a co-binder selected from the group consisting of monosaccharides, disaccharides and mixtures thereof; and
   iii) 20 to 90 wt.% water
c) drying the coated food product obtained in step (b); and
wherein in step b) the weight ratio in the second liquid mixture of binder to co-binder is of from 5:1 to more than 1:1.

Alternatively, the components of the first liquid mixture may be added separately but simultaneously or subsequently so that a layer of fat or oil is sprayed onto the food product onto which layer the topping is applied prior to the application of the second liquid mixture. Accordingly, there is also provided herein a method for preparing a coated food product comprising:
(a) coating the food product in a first step with a layer of an oil or fat and the simultaneous or subsequent coating of said product with a layer-of a topping with a size greater than 0,5 mm;
(b) coating the coated food product obtained in step (a) in a second step with a layer of a second liquid mixture comprising from:
   i) 5 to 40 wt.% of a binder selected from selected from the group consisting of maltodextrins having a dextrin equivalent in the range of 0.1 to 10, dextrin, edible polymers, arabic gum, guar gum and cellulose derivatives;
   ii) 5 to 40 wt.% of a co-binder selected from the group consisting of monosaccharides, disaccharides and mixtures thereof; and
   iii) 20 to 90 wt.% water
(c) drying the coated food product obtained in step (b); and
wherein in step b) the weight ratio in the second liquid mixture of binder to co-binder is of from 5:1 to more than 1:1.

Advantages of the present invention are less dust formation in food factories, less fall off and hence a lower loss of flavors and seasonings during storage, transport, packaging and consumption of the food product. Additionally, the method is suitable for topping food products which so far could not or hardly not be topped, in particular pretzels.

Optionally, the coated food product obtained in step (a) may first be dried before it is subjected to step (b).

### DETAILED DESCRIPTION OF THE INVENTION

According to the present invention, the food product is preferably selected from the group consisting of oven baked food products, deep fried crisps, extruded products, dry roasted nuts, toasted products and general dry food products having a water content of less than 5 percent by weight, calculated on the total weight of said general dry food product, said general dry food product being made of materials selected from the group consisting of cereals, preferably selected from wheat, corn, potato, rice and mixtures thereof, more preferably selected from wheat and corn, potato and rice. The oven baked food product is preferably selected from the group consisting of biscuits, cookies, pretzels, toasts, crackers, and snacks, and is in particular pretzels. The extruded products are preferably deep fried after extrusion.

The oil or fat is preferably selected from the group consisting of edible and vegetable oils. Examples of such oils are olive oil, palm oil, coconut oil, corn oil, line seed oil, peanut oil, rape seed oil, sesame oil, soy been oil, sunflower oil and mixtures thereof.

Suitable toppings for the purpose of the present invention are selected from flavours, seasonings, decorations, and mixtures thereof. Advantageously, larger and/or heavier pieces of toppings than conventionally used can now be used with the present method. Hence, toppings, in particular seasonings of sizes greater than 0.5 mm, preferably between 0.5 and 2mm, more preferably between 0.8 and 2 mm, most preferably between 1 and 2 mm as measured with a Sieve can now be considered for use in the present invention as toppings. Accordingly, for the purpose of the present invention, there is also provided a coated food product which contains toppings with a size greater than 0.5 mm, preferably between 0.5 and 2 mm, more preferably between 0.8 and 2 mm, most preferably between 1 and 2 mm. More in particular, the coated food product contains more than 50% of the topping particles with a size greater than or equal to 1 mm, more preferably more than 10% of the topping particles with a size between 1 mm and 2 mm.

A preferred type of topping is a seasoning. The seasoning is preferably a sweet seasoning or a savory seasoning, the latter optionally having a sour like lemon taste. The seasoning has preferably an average diameter of about 0.1 to 2.0 mm, more preferably 0.2 to 1.5 mm. The topping, in particular seasoning, is well visible on the final coated food product.

According to the invention, the binder is preferably selected from the group consisting of maltodextrins, dextrins, edible polymers, arabic gum, guar gum and cellulose derivatives. The binder is in particular a maltodextrin, preferably a maltodextrin having a dextrin equivalent in the range of 0,1 to 10 which implies that it preferably contains a low amount of reducing sugars.

The edible polymers -are preferably selected from the group consisting of proteins, starches and polysaccharides.

According to the present invention, the co-binder is selected from monosacchrides, disaccharides, and mixtures thereof, preferably is a disaccharide. Suitable monosaccharides are those of the hexose type, in particular those selected from fructose, glucose and mixtures thereof. A suitable and most preferred disaccharide is sucrose, in particular sucrose in powder form such as icing sugar.

According to the present invention, the first liquid mixture comprising a topping and an oil or fat comprises preferably 5,0 to 60,0 percent by weight of seasoning, more preferably 15,0 to 50,0 percent by weight and in particular 25,0 to 45,0 percent by weight, and 40,0 to 95,0 percent by weight of the oil or fat, more preferably 50,0 to 85,0 percent by weight and in particular 55,0 to 75,0 percent by weight, based on the total weight of the mixture. Typically, the topping will represents from 2 to 20%, preferably 4 to 15% and more preferably from 5 to 10% by weight of the coated food product and the fat will represent of from 2 to 20%, preferably of from 3 to 15% by weight of the coated food product. Preferably, the weight ratio of fat or oil to topping is of from 3:1 to 1.5:1, more preferably from 2.5:1 to 2:1, most preferably is of 2:1. Where the component of the first liquid mixture are applied, typically by spraying, separately but simultaneously or subsequently, it has advantageously been found that a coated product of a low fat content could be obtained whilst still presenting the beneficial properties of topping sticking, size and content. By low fat content, it is meant that coated food products with a content of less than 10% by weight, preferably less than 5% by weight and more preferably between 2 and 4% by weight, in particular 3.5% by weight of the coated food product. The second liquid mixture comprising a binder, a co-binder and water comprises 5,0 to 40,0 percent by weight of binder, more preferably 10,0 to 40,0 percent by weight and in particular 20,0 to 40,0 percent by weight, and 5,0 to 40,0 percent by weight of co-binder, more preferably 10,0 to 40,0 percent by weight and in particular 20,0 to 40,0 percent by weight, and water to sum up to 100%, preferably in amount of from 20,0 to 90,0 percent by weight of water, more preferably 20,0 to 80,0 percent by weight and in particular 20,0 to 60,0 percent by weight, based on the total weight of the mixture. The liquid mixture comprising the binder, co-binder and water contains the binder and co-binder in weight ratio between 5:1 to more than 1:1, more preferably between 3:1 to 1.1:1 and in particular between 2:1 and 1.5:1.

For optimum adherance and protection of the topping, it is preferred that the second liquid mixture presents a viscosity in the range of 20 to 70, preferably from 25 to 50, more preferably from 28 to 30 mPa, when measured with a Brookfield Model DV-II viscosimeter with RVT 2 at 30 rpm and at a temperature of 80°C.

Optionally, a flavour enhancer may be used in the second liquid mixture which will provide flavour enhancement but also improved protection of the topping applied onto the food product. A typical flavour enhancer for use herein is a yeast such as Yep, in particular Yep 77, and commercially available from Quest international. Other optional ingredients can also be added to the second liquid mixture such as salts. Typical amount of each of such optional ingredient ranges from 0.1 to 5%, preferably from 0.5% to 1.5% by weight of the second liquid mixture.
The weight ratio of the liquid comprising the topping and the oil or fat and the liquid mixture comprising the binder, co-binder and water is preferably 10:1 to 1:2, more preferably 8:1 to 1:1 and in particular 6:1 to 2:1.

In the last step according to the method of the present invention, the food product is dried in step (c) to a moisture content of preferably not more than about 7 % by weight, more preferably not more than about 5 % by weight and in particular not more than about 3 % by weight.

The present invention also relates to a coated food product obtainable by the method described above. In particular, the topping adhered to the final coated food product is well visible and the food product has an attractive appearance for the consumer. Further, the topping can be of a larger size and/or heavier weight than conventionally used topping without being detrimental to the adherence performance of the topping onto the food product.

### Example 1

A slurry is prepared by adding 45 g of powder flavor with 80 g to a spray fat (Durkex LC 200; obtainable from Loders Croklaan). The dispersion is stored at 50°C.

A coating composition is prepared by dissolving at 80°C 60 g of maltodextrin MD 10 and 40 g of icing sugar with 0.08g salt and 0.08g Yep 77 in 100 g of water. The composition is maintained at the same temperature in a holding tank.

A food product (400 g; moisture content of 1.5%) is transported at a temperature of 90°C via a belt to a tumbler. In the tumbler 125 g of the dispersion is sprayed on the food product during 30 s, while keeping the temperature at 90°C Subsequently, 30 g of the coating composition is added to the same tumbler and is sprayed on the coated food product within 30 s. Finally, the coated food product is dried in the tumbler for about 5 minutes.

### Example 2

The food product according to Example 1 was after drying further dried in a second tumbler until a moisture content of 1%.

### Example 3

A food product (400 g; moisture content of 1.5%) is transported at a temperature of 90°C via a belt to a tumbler. In the tumbler the dispersion of fat (Durkex LC 200; obtainable from Loders Croklaan) and flavour present in the dispersion at a weight ratio of 2:1 is sprayed on the food product during 30 s, while keeping the temperature at 90°C. Subsequently, 30 g of the coating composition made according to the process given in Example 1 and containing 30g maltodextrin MD 10 and 20 g of icing sugar with 0.08g salt and 0.08g Yep 77 in 49.84 g of water is added to the same tumbler and is sprayed on the coated food product within 30 s. Finally, the coated food product is dried in the tumbler for about 5 minutes followed thereafter by a further drying step in a second tumbler until a moisture content of 1%.

The resulting coated food product had the following composition in wt %:

| | |
|---|---|
| Food product | 77 |
| Fat | 10.79 |
| Flavour | 5.39 |
| Coating | 6.74 |

### Example 4

A food product (400 g; moisture content of 1.5%) is transported at a temperature of 90°C via a belt to a tumbler. In the tumbler the fat (Durkex LC 200; obtainable from Loders Croklaan) is sprayed on the food product during 30 s, with the simultaneous spraying of the topping while keeping the temperature at 90°C. Subsequently, 30 g of the coating composition made according to the process given in Example 1 and containing 30g maltodextrin MD 10 and 20 g of icing sugar with 0.10g salt and 0.51g Yep 77 in 49.39 g of water is added to the same tumbler and is sprayed on the coated food product within 30 s. Finally, the coated food product is dried in the tumbler for about 5 minutes followed thereafter by a further drying step in a second tumbler until a moisture content of 1%.

The resulting coated food product had the following composition in wt %:

| | |
|---|---|
| Food product | 72 |
| Fat | 3.63 |
| Flavour | 5.81 |
| Coating | 16.53 |
| Particles* | 1.45 |

| | |
|---|---|
| * Particles with a size greater than 0.5mm, of which more than 50% have a size equal or greater than 1mm | |

## Claims

1. A method for preparing a coated food product comprising:
(a) coating the food product in a first step with a layer of a liquid mixture comprising toppings with a size greater than 0.5mm and an oil or fat;
(b) coating the coated food product obtained in step (a) in a second step with a layer of a second liquid mixture comprising:
(i) 5 to 40 wt.% of a binder selected from the group consisting of maltodextrines having a dextrin equivalent in the range of 0.1 to 10, dextrin, edible polymers, arabic gum, guar gum and cellulose derivatives;
(ii) 5 to 40 wt.% of a co-binder selected from the group consisting of monosaccharides, disaccharides and mixtures thereof; and
(iii) 20 to 90 wt.% water
(c) drying the coated food product obtained in step (b); and wherein in step b) the weight ratio in the second liquid mixture of binder to co-binder is of from 5:1 to more than 1:1.

2. A method for preparing a coated food product comprising:
a) coating the food product in first step with a layer of an oil or fat and the simultaneous or subsequent coating of said product with a layer of toppings with a size greater than 0.5 mm;
b) coating the coated food product obtained in step (a) in a second step with a layer of a second mixture comprising:
(i) 5 to 40 wt.% of a binder selected from the group consisting of maltodextrines having a dextrin equivalent in the range of 0.1 to 10, dextrin, edible polymers, arabic gum, guar gum and cellulose derivatives;
(ii) 5 to 40 wt.% of a co-binder selected from the group consisting of monosaccharides, disaccharides and mixtures thereof; and
(iii) 20 to 90 wt.% water
c) drying the coated food product obtained in step (b); and wherein in step b) the weight ratio in the second liquid mixture of binder to co-binder is of from 5:1 more than 1:1.

3. The method according to either one of claim 1 or 2, wherein the coated food product obtained in step (a) is dried.

4. The method according to any of the preceding claims, wherein the food product is selected from the group consisting of oven baked food products, deep fried crisps, extruded products, toasted products, dry roasted nuts and general dry food products having a water content of less than 5 percent by weight, calculated in the total weight of said general dry food product, said general dry food product being made of materials selected from the group consisting of cereals, preferably wheat and corn, potato and rice.

5. The method of claim 4 wherein the oven baked food product is selected from the group consisting of biscuits, cookies, pretzels, crackers, toast and snacks.

6. The method of claim 4 or claim 5, wherein the oven baked food product are pretzels.

7. The method according to claim 4, wherein the extruded products are deep fried after extrusion.

8. The method according to any one of the preceding claims, wherein the oil or fat is selected from the group consisting of edible and vegetable oils.

9. The method according to any one of the preceding claims, wherein the edible polymers are selected from the group consisting of protein, starches and polysaccharides.

10. The method according to any one of claims 1-9, wherein the first liquid mixture comprising a topping and an oil or fat comprises 5.0 to 60.0 percent by weight of topping and 40.0 to 95.0 percent by weight of the oil or fat, based in the total weight of the mixture.

11. The method according to any one of the preceding claims, wherein the weight ratio of binder to co-binder in the second liquid mixture is between 3:1 to 1.1:1.

12. The method according to any one of the preceding claims, wherein in step (c) the food product is dried to a moisture content of not more than about 7%.

13. The method according to any one of the preceding claims, wherein the topping has an average size of at least 0.5mm with more than 50% of the topping particles with a size greater than or equal to 1mm.

14. The method according to any one of the preceding claims, wherein the second liquid mixture further comprises a flavour enhancer, preferably is a yeast.

15. A coated food product obtainable by method according to any one of claims 1-14.

## Patentansprüche

1. Verfahren zum Herstellen eines überzogenen Nahrungsmittels, umfassend die folgenden Schritte:
(a) Überziehen des Nahrungsmittels in einem ersten Schritt mit einer Schicht einer flüssigen Mischung, die aus Überzugskörpern mit einer Größe über 0,5 mm und aus einem Öl oder Fett besteht;
(b) Überziehen des in Schritt (a) erzeugten überzogenen Nahrungsmittels in einem zweiten Schritt mit einer Schicht einer zweiten flüssigen Mischung, die besteht aus:
(i) 5 bis 40 Masseprozent eines Bindemittels, das aus der Gruppe ausgewählt wird, zu der Maltose-Dextrine mit einem Dextrinäquivalent im Bereich zwischen 0,1 und 10, Dextrin, essbare Polymere, Gummiarabikum, Guarkernmehl und Zellulosederivate gehören;
(ii) 5 bis 40 Masseprozent eines Ko-Bindemittels, das aus der Gruppe ausgewählt wird, zu der Monosaccharide, Disaccharide und Mischungen davon gehören; und
(iii) 20 bis 90 Masseprozent Wasser
(c) Trocknen des in Schritt (b) erzeugten überzogenen Nahrungsmittels; und wobei in Schritt (b) in der zweiten flüssigen Mischung das Masseverhältnis zwischen dem Bindemittel und dem Ko-Bindemittel von 5:1 bis über 1:1 beträgt.

2. Verfahren zum Herstellen eines überzogenen Nahrungsmittels, umfassend die folgenden Schritte:
(a) Überziehen des Nahrungsmittels im ersten Schritt mit einer Schicht eines Öls oder Fetts und gleichzeitiges oder nachfolgendes Überziehen des Nahrungsmittels mit einer Schicht aus Überzugskörpern mit einer Größe über 0,5 mm;
(b) Überziehen des in Schritt (a) erzeugten überzogenen Nahrungsmittels in einem zweiten Schritt mit einer Schicht einer zweiten flüssigen Mischung, die besteht aus:
(i) 5 bis 40 Masseprozent eines Bindemittels, das aus der Gruppe ausgewählt wird, zu der Maltose-Dextrine mit einem Dextrinäquivalent im Bereich zwischen 0,1 und 10, Dextrin, essbare Polymere, Gummiarabikum, Guarkernmehl und Zellulosederivate gehören;
(ii) 5 bis 40 Masseprozent eines Ko-Bindemittels, das aus der Gruppe ausgewählt wird, zu der Monosaccharide, Disaccharide und Mischungen davon gehören; und
(iii) 20 bis 90 Masseprozent Wasser
(c) Trocknen des in Schritt (b) erzeugten überzogenen Nahrungsmittels; und wobei in Schritt (b) in der zweiten flüssigen Mischung das Masseverhältnis zwischen dem Bindemittel und dem Ko-Bindemittel von 5:1 bis über 1:1 beträgt.

3. Verfahren gemäß einem der Ansprüche 1 oder 2, wobei das in Schritt (a) erzeugte überzogene Nahrungsmittel getrocknet wird.

4. Verfahren gemäß jedem der vorherigen Ansprüche, wobei das Nahrungsmittel aus der Gruppe ausgewählt wird, zu der ofengebackene Nahrungsmittel, frittierte Chips, extrudierte Nahrungsmittel, getoastete Nahrungsmittel, trocken geröstete Nüsse und im Allgemeinen trockene Nahrungsmittel gehören, die einen Wassergehalt von weniger als 5 Masseprozent haben, berechnet für die Gesamtmasse des im Allgemeinen trockenen Nahrungsmittels, wobei das im Allgemeinen trockene Nahrungsmittel aus Materialien besteht, die aus der Gruppe ausgewählt werden, zu der Zerealien, vorzugsweise aus Weizen und Mais, Kartoffeln und Reis gehören.

5. Verfahren gemäß Anspruch 4, wobei das ofengebackene Nahrungsmittel aus der Gruppe ausgewählt wird, zu der Kekse, Plätzchen, Brezeln, Cracker, Toast und Snacks gehören.

6. Verfahren gemäß Anspruch 4 oder Anspruch 5, wobei das ofengebackene Nahrungsmittel Brezeln sind.

7. Verfahren gemäß Anspruch 4, wobei die extrudierten Nahrungsmittel nach dem Extrudieren frittiert werden.

8. Verfahren gemäß jedem der vorherigen Ansprüche, wobei das Öl oder Fett aus der Gruppe ausgewählt wird, zu der essbare und pflanzliche Öle gehören.

9. Verfahren gemäß jedem der vorherigen Ansprüche, wobei die essbaren Polymere aus der Gruppe ausgewählt werden, zu der Protein, Stärken und Polysaccharide gehören.

10. Verfahren gemäß jedem der Ansprüche 1 bis 9, wobei die erste flüssige Mischung, die aus Überzugskörpern und aus einem Öl oder Fett besteht, zu 5,0 bis 60,0 Masseprozent aus den Überzugskörpern und zu 40,0 bis 95,0 Masseprozent aus dem Öl oder Fett besteht, basierend auf der Gesamtmasse der Mischung.

11. Verfahren gemäß jedem der vorherigen Ansprüche, wobei in der zweiten flüssigen Mischung das Masseverhältnis zwischen dem Bindemittel und dem Ko-Bindemittel von 3:1 bis 1,1:1 beträgt.

12. Verfahren gemäß jedem der vorherigen Ansprüche, wobei das Nahrungsmittel in Schritt (c) bis zu einem Feuchtigkeitsgehalt von nicht mehr als etwa 7 % getrocknet wird.

13. Verfahren gemäß jedem der vorherigen Ansprüche, wobei die Überzugskörper eine durchschnittliche Größe von mindestens 0,5 mm haben und wobei mehr als 50 % der Überzugskörper eine Größe von mindestens 1 mm haben.

14. Verfahren gemäß jedem der vorherigen Ansprüche, wobei die zweite flüssige Mischung des Weiteren einen Geschmacksverstärker enthält, der vorzugsweise eine Hefe ist.

15. Überzogenes Nahrungsmittel, das mit dem Verfahren gemäß jedem der Ansprüche 1 bis 14 hergestellt werden kann.

## Revendications

1. Procédé pour préparer un produit alimentaire enrobé comprenant les étapes consistant à :
(a) enrober, dans une première étape, le produit alimentaire d'une couche d'un mélange liquide comprenant des garnitures ayant une taille supérieure à 0,5 mm et une huile ou une matière grasse ;
(b) enrober, dans une seconde étape, le produit alimentaire enrobé obtenu à l'étape (a) d'une couche d'un second mélange liquide comprenant :
(i) 5 à 40 % en poids d'un agent liant sélectionné dans le groupe constitué de maltodextrines ayant un équivalent dextrose dans la plage allant de 0,1 à 10, de dextrine, de polymères comestibles, de gomme arabique, de gomme de guar et de dérivés de cellulose ;
(ii) 5 à 40 % en poids d'un agent co-liant sélectionné dans le groupe constitué de monosaccharides, de disaccharides et des mélanges de ceux-ci ;
(iii) 20 à 90% en poids d'eau
(c) sécher le produit alimentaire enrobé obtenu à l'étape (b) ; et dans lequel, à l'étape (b), le rapport en poids dans le second mélange liquide entre le liant et le co-liant est de 5 :1 à plus de 1 :1.

2. Procédé pour préparer un produit alimentaire enrobé, comprenant les étapes consistant à :
(a) enrober, dans la première étape, le produit alimentaire d'une couche d'huile ou de matière grasse et enrober de manière simultanée ou subséquente ledit produit d'une couche de garniture ayant une taille supérieure à 0,5 mm ;
(b) enrober, dans une seconde étape, le produit alimentaire enrobé obtenu à l'étape (a) d'une couche d'un mélange liquide comprenant :
(i) 5 à 40 % en poids d'un agent liant sélectionné dans le groupe constitué de maltodextrines ayant un équivalent dextrose dans la plage allant de 0,1 à 10, de dextrine, de polymères comestibles, de gomme arabique, de gomme de guar et de dérivés de cellulose ;
(ii) 5 à 40 % en poids d'un agent co-liant sélectionné dans le groupe constitué de monosaccharides, de disaccharides et des mélanges de ceux-ci ;
(iii) 20 à 90% en poids d'eau
(c) sécher le produit alimentaire enrobé obtenu à l'étape (b) ; et dans lequel, à l'étape (b), le rapport en poids dans le second mélange liquide du liant au co-liant est de 5 :1 à plus de 1:1.

3. Procédé selon l'une quelconque des revendications 1 ou 2, dans lequel le produit alimentaire enrobé obtenu à l'étape (a) est séché.

4. Procédé selon l'une quelconque des revendications précédentes, dans lequel le produit alimentaire est sélectionné dans le groupe constitué de produits alimentaires cuits au four, de pommes de terre frites (chips), de produits extrudés, de produits grillés, de noisettes grillées et des produits alimentaires secs en général ayant une teneur en eau inférieure à 5 pourcent en poids, calculé par rapport au poids total dudit produit alimentaire sec, ledit produit alimentaire sec étant réalisé à partir d'une substance sélectionnée dans le groupe constitué de céréales, de préférence de blé et de maïs, de pomme de terre et de riz.

5. Procédé selon la revendication 4, dans lequel le produit alimentaire cuit au four est sélectionné dans le groupe constitué de biscuits, de cookies, de bretzels, de crackers, de toasts et de snacks.

6. Procédé selon l'une quelconque des revendications 4 ou 5, dans lequel le produit alimentaire cuit au four consiste en des bretzels.

7. Procédé selon la revendication 4, dans lequel les produits extrudés sont frits après l'extrusion.

8. Procédé selon l'une quelconque des revendications précédentes, dans lequel l'huile ou la matière grasse est sélectionnée dans le groupe constitué d'huiles végétales et comestibles.

9. Procédé selon l'une quelconque des revendications précédentes, dans lequel les polymères comestibles sont sélectionnés dans le groupe constitué de protéines, d'amidons et de polysaccharides.

10. Procédé selon l'une quelconque des revendications 1 à 9, dans lequel le premier mélange liquide comprenant une garniture et une huile ou une matière grasse comprend 5,0 à 60,0 pourcent en poids de garniture et 40,0 à 95,0 pourcent en poids d'huile ou de matière grasse, sur la base du poids total du mélange.

11. Procédé selon l'une quelconque des revendications précédentes, dans lequel le rapport en poids du liant au co-liant dans le second mélange liquide est compris entre 3 :1 et 1,1 : 1.

12. Procédé selon l'une quelconque des revendications précédentes, dans lequel, à l'étape (c), le produit alimentaire est séché jusqu'à un taux d'humidité inférieur à environ 7 %.

13. Procédé selon l'une quelconque des revendications précédentes, dans lequel la garniture a une taille moyenne d'au moins 0,5 mm avec plus de 50 % des particules de garniture ayant une taille supérieure ou égale à 1 mm.

14. Procédé selon l'une quelconque des revendications précédentes, dans lequel le second mélange liquide comprend en outre un agent de saveur qui est de préférence une levure.

15. Produit alimentaire enrobé pouvant être obtenu selon le procédé selon l'une quelconque des revendications 1 à 14.
